# EUROPEAN PATENT APPLICATION

(11) **EP 4 512 536 A1**
(43) Date of publication of application: **26.02.2025**
(21) Application number: 23193043.9
(22) Date of filing: 23.08.2023
(51) Int. Cl.: B05B 15/52, B05B 13/02, B05B 13/04, B08B 1/00, B25J 9/00, B25J 19/00

(54) **PAINT SPRAY BOOTH AND METHOD FOR CLEANING AT LEAST ONE PART OF A PAINT SPRAY ROBOT AND CORRESPONDING METHOD**

(71) Applicant: Ford Global Technologies, LLC, Dearborn, MI 48126 (US)
(72) Inventor: Gandia Corral, Pablo, 46011 Valencia (ES)
(74) Representative: Markowitz, Markus

(57) **Abstract**

The invention relates to a paint spray booth (1) comprising at least one paint spray robot, at least one additional robot (2) and at least one control device for controlling operation of the paint spray robot and operation of the additional robot (2). To provide an automatic cleaning system and to reduce time requirements for cleaning a paint spray robot, the control device is arranged to operate the additional robot (2) at least outside a painting operation of the paint spray booth (1) in a cleaning mode in which the additional robot (2) is used to automatically clean at least one part of the paint spray robot.

## Description

The invention relates to a paint spray booth with the features of the generic part of claim 1, comprising at least one paint spray robot, at least one additional robot and at least one control device for controlling operation of the paint spray robot and operation of the additional robot. Further, the invention relates to a method for cleaning at least one part of a paint spray robot located in a paint spray booth.

Paint spray booths are used in vehicle production to paint car bodies. Particularly, an atomizer of a paint spray robot gets contaminated due to paint overspray during paint applications. Therefore, the atomizer needs to be cleaned in between paint applications to ensure a desired paint quality.

Currently, a paint spray robot atomizer is cleaned manually at each production break, which is time consuming and human resources consuming. A manual cleaning cycle time per robot can be estimated around two minutes. This means, for a, just exemplary, 35 robot configuration per paint spray booth in total 70 minutes cleaning time per cleaning cycle is required. This task usually is done by a multiple cleaning operators per shift.

JP H07 222 945 A discloses a washing means to jet out a cleaning liquid and compressed air being installed in respective arms of both coating robots set adjacently to each other. The respective coating robots are previously taught about positions to be washed by the adjacent coating robots with each other. One coating robot is washed by the washing means of the other coating robot, and the other coating robot is washed by the washing means of the coating robot.

US 6 712 285 B2 discloses a station having comprises at least two areas for cleaning/filling a reservoir, each adapted to receive a sub-assembly formed by a reservoir and a sprayer while this sub-assembly is disconnected from the robot. A device or devices for cleaning and/or filling the reservoir and/or the sprayer in each of these areas are provided, while these areas are adapted to be brought into a position of connection of a sub-assembly, disposed in one of them with the cleaning and/or filling device or devices. A process consists, inter alia, in positioning a coating product supply unit, in a position of connection with the first sub-assembly received in an area of the station of cleaning/filling.

US 9 082 454 B2 relates to automatically removing contaminants from a manufactured part. A first robotic arm automatically holds the manufactured part. A second arm automatically sprays the manufactured part with a solution that causes contaminants to be removed from the manufactured part. The solution is collected. The collected solution contains the contaminants that were removed from the manufactured part.

US 9 452 451 B2 relates to a cleaning device for an atomizer having a specified outer contour, in particular for cleaning a rotary atomizer, comprising at least one cleaning brush for cleaning the atomizer, wherein the cleaning brush has a specified brush contour. The brush contour of the cleaning brush is adapted to the outer contour of the atomizer so that the cleaning brush nestles up against the atomizer. The invention further relates to a corresponding cleaning brush and to a suitable cleaning method.

US 2011 / 0 045 194 A1 discloses a robot and operating methods for a painting system. The robot is a handling robot for opening and closing doors or bonnets of motor vehicle bodies. A robot element of a handling robot that is susceptible to dirt retention, e.g., a handling tool, may be arranged away from the spray jet of a paint during the painting operation and is applied to the component that is to be painted. The robot may include a cleaning device for cleaning or for keeping the robot element of the handling robot that is susceptible to dirt retention clean from paint that is applied with spray jet in the painting operation.

US 2019 / 0 337 003 A1 discloses a painting robot with advanced fluid delivery system, enhanced kinematics, and a service airlock compartment. The painting robot includes a fluid delivery system which places color changing valves and pumping hardware on the back side of the robot's mounting pedestal, where it can be serviced without a technician having to enter the spray booth. Additionally, the robot enables routine cleaning and maintenance to be performed without personnel entering the spray booth and without stopping the vehicle conveyor, due to simplified outer arm design, improved home positioning and an airlock booth adjacent to the robot pedestal. Service personnel can clean and service the applicator and other components on the outer arm from the airlock booth, while other robots continue painting parts moving on the conveyor, without allowing fume-laden vapors into the operator aisle.

US 2020 / 0 338 583 A1 discloses a method for cleaning a paint spray gun, which comprises a rotating atomization head to apply a coating material while rotating and an outer circumferential tube to cover the exterior of the rotating atomization head. The method has a cleaning solution application step for applying a cleaning solution to the external face of the outer circumferential tube, and a rotating atomization head rotation step for generating a rotational flow between the rotating atomization head and the outer circumferential tube by rotating the rotating atomization head. The cleaning solution flowing down the external face of the outer circumferential tube applied in the cleaning solution application step penetrates between the rotating atomization head and the outer circumferential tube by way of the rotational flow. Such method uses a small amount of cleaning solution for cleaning external and internal faces of the outer circumferential tube and the external face of a rotating atomization head.

It is an object of the invention to provide an automatic cleaning system and to reduce time requirements for cleaning a paint spray robot.

According to the invention this object is solved by a paint spray booth with the features of claim 1, wherein the control device is arranged to operate the additional robot at least outside a painting operation of the paint spray booth in a cleaning mode in which the additional robot is used to automatically clean at least one part of the paint spray robot.

It should be noted that the features and measures listed individually in the following description can be combined with each other in any technically useful way and show further embodiments of the invention. The description additionally characterizes and specifies the invention, in particular in connection with the figures.

According to the invention a paint spray booth with an automatic cleaning system is disclosed that uses an additional robot installed in the paint spray booth as a cleaning robot to clean at least one part, e. g. the wrist and/or an atomizer, of one or more paint spray robots in the paint spray booth. Due to this automatic cleaning the cycle time for cleaning is shorter compared to a conventional manual cleaning cycle time. Moreover, this automatic cleaning can be done with fewer operators, less solvent and fewer rags. In addition, the control device can be programmed according to special demands. In other words, e.g., a shorter/longer wash can be carried out with less solvent.

The paint spray booth may comprise two or more additional robots operated by the control device according to the invention. Moreover, the paint spray booth may comprise two or more paint spray robots operated by the control device according to the invention.

The control device may comprise at least one computer programmed to carry out the invention. The computer may comprise at least one memory unit including at least one algorithm for carrying out the invention.

The paint spray booth may be used to paint vehicle bodies, especially car bodies.

According to an embodiment of the invention the additional robot is a handling robot, preferably a door opening robot, wherein the control device is arranged to operate the additional robot during a painting operation of the paint spray booth in a door opening mode in which the additional robot is used to automatically open at least one door of a vehicle body. Through this, in the door opening mode, the door opening robot can be used to open side doors, rear cargo doors and/or lift gates. Since such a door opening robot is usually installed in a paint spray booth, no additional costs arise for a separate cleaning robot.

According to a further embodiment of the invention the paint spray booth comprises at least one brush station comprising at least one brush connectable to a tool of the additional robot, wherein the control device is arranged to operate the additional robot to connect the tool automatically to said brush. For example, the tool of the additional robot may be shaped like a skewer. The tool of the additional robot is formed to enable the additional robot to carry out a special operation during the painting operation of the paint spray booth, wherein this special operation is not part of the cleaning mode of the additional robot. For example, the tool of the additional robot is formed to carry out a door opening operation during the painting operation of the paint spray booth. The control device may also be arranged to disconnect the tool from the brush after inserting the brush with the additional robot in the brush station again. The brush station may comprise two or more brushes, especially for different purposes.

According to a further embodiment of the invention the brush station comprises at least one solvent-applying brush, wherein the control device is arranged to operate the additional robot in a solvent-applying mode in which the additional robot is operated to connect its tool to said solvent-applying brush, to apply a solvent by the solvent-applying brush on the at least one part of the paint spray robot, to arrange the solvent-applying brush in the brush station after applying the solvent on the at least one part of the paint spray robot, and to disconnect the tool from said solvent-applying brush arranged in the brush station. The solvent-applying brush can be dampened in the solvent contained within the brush station. The brush station may comprise two or more solvent-applying brushes. Additionally, the brush station may comprise at least one drying brush, wherein the control device may be arranged to operate the additional robot in a drying mode in which the additional robot is operated to connect its tool to said drying brush, to dry the at least one part of the paint spray robot by the drying brush, to arrange the drying brush in the brush station after drying the at least one part of the paint spray robot, and to disconnect the tool from said drying brush arranged in the brush station. The drying brush is dry. Moreover, the brush station may comprise at least one lubricating brush, wherein the control device may be arranged to operate the additional robot in a lubricating mode in which the additional robot is operated to connect its tool to said lubricating brush, to apply a lubricant by the lubricating brush on the at least one part of the paint spray robot, to arrange the lubricating brush in the brush station after applying the lubricant on the at least one part of the paint spray robot, and to disconnect the tool from said lubricating brush arranged in the brush station. The lubricating brush can be damped in the lubricant, e. g. Vaseline^{®}. Through this, the cleaning of the at least one part of the paint spray robot during the next cleaning cycle can be enhanced. The additional robot may consecutively take the brushes to carry out a special cleaning of the at least one part of the paint spray robot. The present embodiment does not only allow to use different tools, e.g. brushes with different properties, hardness, etc., for different purposes, but also avoids having to equip the additional robot with appropriate technology. This gives more flexibility and usage options.

According to a further embodiment of the invention the paint spray booth comprises at least one bayonet mount-like fastening mechanism for connecting the tool of the additional robot to the brush, wherein the bayonet mount-like fastening mechanism is partly constituted by a male part of the tool and partly constituted by a female part of said brush. For connecting the tool to the brush the male part of the tool is inserted in the female part of the brush. A spring may be arranged within the female part of the brush, wherein the spring may be compressed by the male part of the tool when the male part is inserted in the female part. The male part inserted in the female part can be rotated by the additional robot with respect to the female part to fasten the brush to the tool. To disconnect the brush from the tool the above connection steps can be inverted.

According to a further embodiment of the invention the tool of the additional robot is a 3D printing component. Through this, the tool can be easily formed also with a complex geometry.

According to a further embodiment of the invention the tool of the additional robot comprises at least one mechanical fuse. This enhances the safety of the paint spray booth.

The above object is also solved by a method with the features according to claim 8, wherein the at least one part of the paint spray robot is automatically cleaned by means of at least one additional robot installed in the paint spray booth.

The advantages mentioned above with reference to the paint spray booth are correspondingly associated with the method. In particular, the paint spray booth can be used in accordance with one of the above-mentioned embodiments or a combination of at least two of these embodiments with one another for carrying out the method. Advantageous embodiments of the paint spray booth can correspond to advantageous embodiments of the method, even if this is not referred to in detail below.

According to an embodiment of the invention the at least one part of the paint spray robot is automatically cleaned by means of at least one additional robot in form of a door opening robot installed in the paint spray booth.

According to a further embodiment of the invention a solvent is applied on the at least one part of the paint spray robot by means of at least one solvent-applying brush connected to the additional robot. Thereafter, the at least one part of the paint spray robot may be dried by means of at least one drying brush connected to the additional robot. After drying, the at least one part of the paint spray robot may be lubricated by means of at least one lubricating brush connected to the additional robot.

Further advantageous embodiments of the invention are disclosed in the dependent claims and the following figure description. It shows
- Fig. 1: a schematic and perspective view of an embodiment of a paint spray booth according to the invention;
- Figs. 2a-2b: schematic and perspective views of a further embodiment of a paint spray booth according to the invention;
- Fig. 3: a schematic and perspective detail view of the paint spray booth shown in Figs. 2a-2b;
- Fig. 4: a schematic and perspective detail view of a tool; and
- Fig. 5: a flowchart of an embodiment of the method according to the invention.

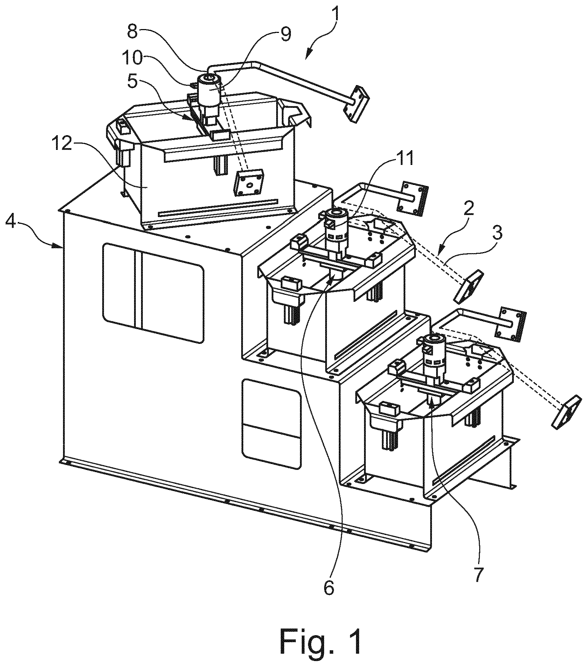

Fig. 1 shows a schematic and perspective view of an embodiment of a paint spray booth 1 according to the invention.

The paint spray booth 1 comprises at least one paint spray robot which is not shown in Fig. 1. Moreover, the paint spray booth 1 comprises at least one additional robot 2 in form of a door opening robot having a tool 3 being arranged to open doors of a vehicle body (not shown). Further, the paint spray booth 1 comprises at least one control device (not shown) for controlling operation of the paint spray robot and operation of the additional robot 2.

The control device is arranged to operate the additional robot 2 during a painting operation of the paint spray booth 1 in a door opening mode in which the additional robot 2 is used to automatically open at least one door of the vehicle body. Moreover, the control device is arranged to operate the additional robot 2 outside a painting operation of the paint spray booth 1 in a cleaning mode in which the additional robot 2 is used to automatically clean at least one part of the paint spray robot.

For this purpose the paint spray booth 1 comprises at least one brush station 4 comprising three different brushes 5, 6 and 7 respectively connectable to the tool 3 of the additional robot 2. The control device is arranged to operate the additional robot 2 to connect the tool 3 automatically to the respective brush 5, 6 and 7. This is shown in Fig. 1 for each brush 5, 6 and 7, wherein the tool 3 is shown in continuous lines in different inserted position, in which a male part 8 of the tool 3 is inserted in a female part 9 of the respective brush 5, 6 and 7. Afterwards the tool 3 is turned with respect to the respective insertion direction about 90° in a counterclockwise direction, so that a side pin 10 extending laterally from the male part 6 engages a party circumferential slot 11 on the female part. This fastening position of the tool 3 is shown in dashed lines. Through this a bayonet mount-like fastening mechanism for connecting the tool 3 to the respective brushes 5, 6 and 7 is created, wherein the bayonet mount-like fastening mechanism is partly constituted by the male part 8 with the side pin 10 of the tool 3 and partly constituted by the female part 9 of the respective brush 5, 6 and 7.

In particular, the brush station 4 comprises a solvent-applying brush 5, a drying brush 6, and a lubricating brush 7, wherein in Fig. 1 each brush 5, 6 and 7 is accommodated in a respective receptacle 12 from which the respective brush 5, 6 and 7 can be taken by the additional robot 2.

The control device is arranged to operate the additional robot 2 firstly in a solvent-applying mode in which the additional robot 2 is operated to connect its tool 3 to said solvent-applying brush 5, to apply a solvent by the solvent-applying brush 5 on the at least one part of the paint spray robot, to arrange the solvent-applying brush 5 in the brush station 4 after applying the solvent on the at least one part of the paint spray robot, and to disconnect the tool 3 from said solvent-applying brush 5 arranged in the brush station 4 again. Moreover, the control device is arranged to operate the additional robot 2 secondly in a drying mode in which the additional robot 2 is operated to connect its tool 3 to said drying brush 6, to dry the at least one part of the paint spray robot by the drying brush 6, to arrange the drying brush 6 in the brush station 4 after drying the at least one part of the paint spray robot, and to disconnect the tool 3 from said drying brush 6 arranged in the brush station 4 again. Further, the control device is arranged to operate the additional robot 2 thirdly in a lubricating mode in which the additional robot 2 is operated to connect its tool 3 to said lubricating brush 7, to apply a lubricant by the lubricating brush 7 on the at least one part of the paint spray robot, to arrange the lubricating brush 7 in the brush station 4 after applying the lubricant on the at least one part of the paint spray robot, and to disconnect the tool 3 from said lubricating brush 7 arranged in the brush station 4 again.

The tool 3 of the additional robot 2 may be a 3D printing component. Moreover, the tool 3 of the additional robot 2 may comprise at least one mechanical fuse (not shown).

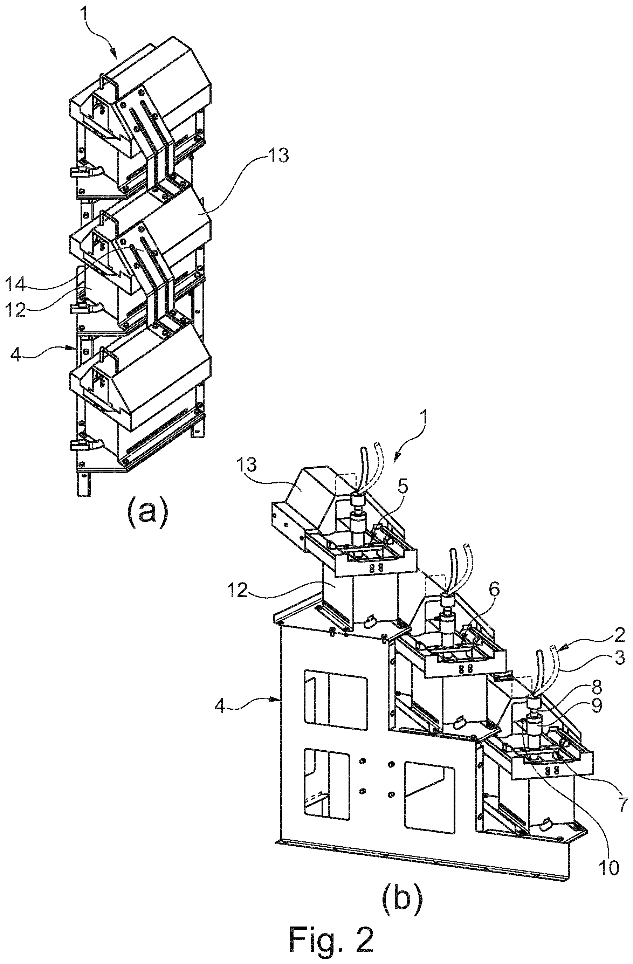

Figs. 2a-2b are a schematic and perspective views of a further embodiment of a paint spray booth 1 according to the invention. The paint spray booth 1 differs from the embodiment shown in Fig. 1 in that the brush station 4 comprises a cover 13 for each receptacle 12. The covers 13 are slidingly supported by the receptacles 12, so that the covers 13 can horizontally slide between closed positions shown in Fig. 2a and open positions shown in Fig. 2b. The covers 13 are rigidly coupled in pairs to each other by coupling elements 14. In Fig. 2b, for explanation, each of the brushes 5 to 7 is coupled to a tool 3 of at least one additional robot 2 in form of a door opening robot. To avoid repetition reference is made to the above description of Fig. 1.

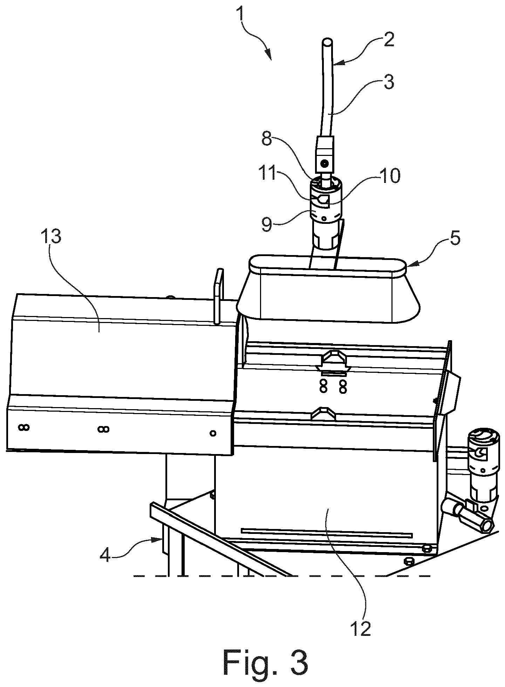

Fig. 3 shows a schematic and perspective detail view of the paint spray booth 1 shown in Figs. 2a-2b. Fig. 3 shows the tool 3 connected to the brush 5, wherein the brush 5 is moved out the receptacle 12 by means of the additional robot 2. To avoid repetition reference is made to the above description of Fig. 1.

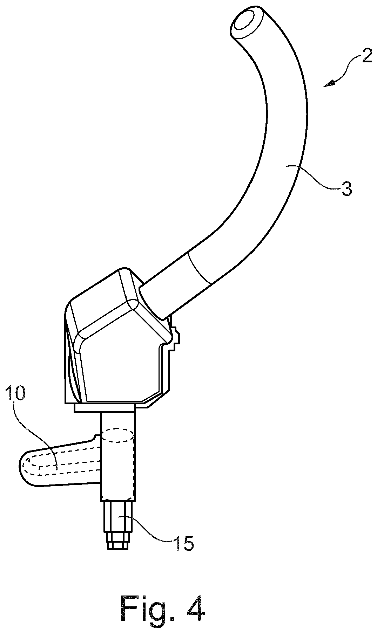

Fig. 4 shows a schematic and perspective detail view of the tool 3 described above. Tool 3 comprises the side pin 10 that can engage the slot 11 according to Figs. 2a-2b and 3.

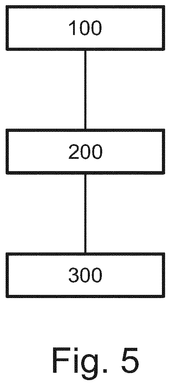

Fig. 5 shows a flowchart of an embodiment of the method according to the invention for cleaning at least one part of a paint spray robot located in a paint spray booth. The at least one part of the paint spray robot is automatically cleaned by means of at least one additional robot in form of a door opening robot installed in the paint spray booth.

For this, in a first step 100, a solvent is applied on the at least one part of the paint spray robot by means of at least one solvent-applying brush connected to the additional robot. In a second step 200, the at least one part of the spray robot is dried by means of at least one drying brush connected to the additional robot. In a third step 300, a lubricant is applied on the at least one dried part of the paint spray robot by means of at least one lubricating brush connected to the additional robot.

### Reference signs

- 1: paint spray booth
- 2: additional robot
- 3: tool
- 4: brush station
- 5: brush
- 6: brush
- 7: brush
- 8: male part of 3
- 9: female part of 5, 6 and 7
- 10: side pin of 3
- 11: slot of 9
- 12: receptacle
- 13: cover
- 14: coupling element
- 100: method step
- 200: method step
- 300: method step

## Claims

1. A paint spray booth (1) comprising at least one paint spray robot, at least one additional robot (2) and at least one control device for controlling operation of the paint spray robot and operation of the additional robot (2),
**characterized in that**
the control device is arranged to operate the additional robot (2) at least outside a painting operation of the paint spray booth (1) in a cleaning mode in which the additional robot (2) is used to automatically clean at least one part of the paint spray robot.

2. The paint spray booth (1) according to claim 1,
**characterized in that**
the additional robot (2) is a handling robot, especially a door opening robot, wherein the control device is arranged to operate the additional robot (2) during a painting operation of the paint spray booth (1) in a door opening mode in which the additional robot (2) is used to automatically open at least one door of a vehicle body.

3. The paint spray booth (1) according to claim 1 or 2,
**characterized by**
at least one brush station (4) comprising at least one brush (5, 6, 7) connectable to a tool (3) of the additional robot (2), wherein the control device is arranged to operate the additional robot (2) to connect the tool (3) automatically to said brush (5, 6, 7).

4. The paint spray booth (1) according to claim 3,
**characterized in that**
the brush station (4) comprises at least one solvent-applying brush (5), wherein the control device is arranged to operate the additional robot (2) in a solvent-applying mode in which the additional robot (2) is operated to connect its tool (3) to said solvent-applying brush (5), to apply a solvent by the solvent-applying brush (5) on the at least one part of the paint spray robot, to arrange the solvent-applying brush (5) in the brush station (4) after applying the solvent on the at least one part of the paint spray robot, and to disconnect the tool (3) from said solvent-applying brush (5) arranged in the brush station (4).

5. The paint spray booth (1) according claims 3 or 4,
**characterized by**
at least one bayonet mount-like fastening mechanism for connecting the tool (3) to the brush (5, 6, 7), wherein the bayonet mount-like fastening mechanism is partly constituted by a male part (8) of the tool (3) and partly constituted by a female part (9) of said brush (5, 6, 7).

6. The paint spray booth (1) according to any of the claims 3 to 5,
**characterized in that**
the brush station (4) comprises at least one receptacle (12) for accommodating the brush (5, 6, 7) when the brush (5, 6, 7) is not connected to the tool (3), and at least one cover (13) slidingly supported by the receptacle to be slidably arranged between an open position and a closed position.

7. The paint spray booth (1) according to one of the preceding claims,
**characterized in that**
the tool (3) of the additional robot (2) is a 3D printing component.

8. The paint spray booth (1) according to one of the preceding claims,
**characterized in that**
the tool (3) of the additional robot (2) comprises at least one mechanical fuse.

9. A method for cleaning at least one part of a paint spray robot located in a paint spray booth (1) in particular according to one of the preceding claims,
**characterized in that**
the at least one part of the paint spray robot is automatically cleaned by means of at least one additional robot (2) installed in the paint spray booth (1).

10. The method according to claim 9,
**characterized in that**
the at least one part of the paint spray robot is automatically cleaned by means of at least one additional robot (2) in form of a door opening robot installed in the paint spray booth (1).

11. The method according to claim 9 or 10,
**characterized in that**
a solvent is applied on the at least one part of the paint spray robot by means of at least one solvent-applying brush (5) connected to the additional robot (2).
